Europäisches Patentamt

European Patent Office

Office européen des brevets

(19)

(11) Numéro de publication : **0 362 054 B1**

(12) **FASCICULE DE BREVET EUROPEEN**

(45) Date de publication du fascicule du brevet :
**15.04.92 Bulletin 92/16**

(51) Int. Cl.⁵ : **F02K 7/16,** F02K 9/78,
F02K 9/52, F02K 3/10

(21) Numéro de dépôt : **89402639.2**

(22) Date de dépôt : **27.09.89**

(54) **Dispositif d'injection de gaz pour propulseur combiné turbo-stato-fusée.**

(30) Priorité : **28.09.88 FR 8812645**

(43) Date de publication de la demande :
**04.04.90 Bulletin 90/14**

(45) Mention de la délivrance du brevet :
**15.04.92 Bulletin 92/16**

(84) Etats contractants désignés :
**DE FR GB IT**

(56) Documents cités :
**DE-A- 1 923 150**
**DE-C- 3 617 915**
**GB-A- 2 205 360**
**US-A- 2 482 505**
**US-A- 3 172 253**
**US-A- 3 286 473**
**US-A- 3 413 810**

(73) Titulaire : **SOCIETE NATIONALE D'ETUDE ET DE CONSTRUCTION DE MOTEURS D'AVIATION, "S.N.E.C.M.A."**
**2, Boulevard du Général Martial Valin**
**F-75015 Paris (FR)**

(72) Inventeur : **Labatut, Josiane, Marie-Françoise**
**5, rue Pierre Brossolette**
**F-91330 Yerres (FR)**
Inventeur : **Marlin, François, Marie, Paul**
**64, Boulevard Aristide Briand**
**F-77000 Melun (FR)**
Inventeur : **Mazeaud, Georges**
**Les Rives de l'Yerres Bâtiment B3**
**F-91330 Yerres (FR)**
Inventeur : **Mirville, François, Jean Pierre**
**3, rue de la Contrescarpe**
**F-77000 Melun (FR)**

(74) Mandataire : **Moinat, François et al**
**S.N.E.C.M.A. Service des Brevets Boîte Postale 81**
**F-91003 Evry Cédex (FR)**

EP 0 362 054 B1

Jouve, 18, rue Saint-Denis, 75001 PARIS

## Description

La présente invention a pour objet un propulseur combiné turbo-stato-fusée à cycle dit expander ou bien à générateur de gaz externe comportant un dispositif amélioré d'injection des gaz de turbine et/ou des gaz d'échappement du générateur de gaz, dans la veine d'air pour les fonctionnements en turbo-fusée et en statoréacteur.

Le but de tels moteurs est de pousser un avion depuis le décollage jusqu'aux vitesses hypersoniques en lui donnant à tout instant du vol les meilleures performances, c'est à dire en réalisant les meilleurs compromis poussées/masse, poussée/surface frontale, grande impulsion spécifique.

Pour atteindre ces objectifs, on a réalisé un propulseur utilisant pour combustibles l'hydrogène liquide et l'oxygène liquide et utilisant trois modes de fonctionnement.

Du démarrage et jusqu'à un nombre de Mach de 5 et de l'altitude 0 jusqu'à environ 20 km, le propulseur fonctionne en mode turbo expander ou bien turbo fusée (dans le cas d'un propulseur à générateur de gaz) les gaz d'échappement de la turbine, riches en hydrogène étant injectés dans la veine d'air, préalablement comprimé par le compresseur, pour y être brûlés et éjectés dans une tuyère convergente-divergente.

De Mach 5 à Mach 7, et à une altitude de 20 à 35 km, le propulseur fonctionne en mode statoréacteur, l'air pénétrant dans la veine n'étant alors pas comprimé en dehors de la simple compression dynamique dans l'entrée d'air, le compresseur mis en autorotation ayant un rapport de pression proche de l'unité.

Dans le cas d'un circuit expander, le carburant injecté dans la veine est d'une part de l'hydrogène issu directement du circuit régénératif (échangeur de chaleur sur paroi de tuyère), d'autre part de l'hydrogène issu de ce même circuit qui a ensuite été détendu dans la turbine de turbopompe LH2 du circuit hydraulique. Dans le cas d'un circuit à générateur de gaz, les gaz injectés dans la chambre de combustion du statoréacteur sont constitués par l'hydrogène directement issu du circuit régénératif et par les gaz de combustion du générateur de gaz, après utilisation partielle de l'énergie de ces gaz pour l'entraînement des turbopompes à LH2 et LOx.

Enfin, au delà de Mach 7 et de 35 km d'altitude où une propulsion aérobie à combustion subsonique n'est plus performante, le propulseur passe en mode fusée où la chambre de combustion disposée dans la veine annulaire n'est plus alimentée.

Il est donc nécessaire de prévoir un dispositif d'injection de gaz dans la chambre de combustion annulaire qui permette l'introduction d'hydrogène seul et/ou de gaz de combustion du moteur fusée auxiliaire (générateur de gaz) dans les modes turbo et statoréacteur. Il est également nécessaire que le dispositif d'injection tout en restant d'architecture simple, permette un bon accrochage de la flamme dans la chambre et un bon mélange air/gaz dans les deux modes de fonctionnement.

De tels dispositifs propulseurs combinés ont déjà été proposés, notamment par le GB-A-2 205 360 et par US-A-2 482 505.

Ces propulseurs de l'art antérieur montrent, entre le corps central du générateur de gaz, et le carter externe, des bras radiaux qui permettent d'introduire, dans la veine annulaire les gaz d'échappement de la turbine du générateur de gaz.

Mais, du fait que, pour réaliser les compromis poussée/masse et poussée/surface frontale dont il a été question plus haut, une bonne solution consiste à réaliser un propulseur dont la turbine à ergols est disposée à l'intérieur de la veine annulaire destinée aux fonctionnements turbo et stato, tandis que les circuits d'alimentation en ergols (turbopompes et canalisations, ainsi que le générateur de gaz éventuel) sont extérieurs au propulseur proprement dit, il est nécessaire de réaliser un dispositif d'injection qui permette l'introduction d'une première partie du carburant depuis la paroi interne de la veine en sortie de la turbine de puissance et l'introduction d'une seconde partie du carburant à travers la paroi externe de la veine, en sortie des circuits externes d'alimentation en ergols.

C'est le but de la présente invention que de prévoir un dispositif qui réalise ces objectifs.

Un autre but de l'invention est bien sûr de prévoir les modes d'alimentation d'un tel dispositif d'injection en fonction des différents modes de fonctionnement possibles du propulseur.

Donc un propulseur combiné turbo-stato-fusée comprenant une turbine à ergols disposée dans un corps central du propulseur, ledit corps central étant entouré d'une veine annulaire comportant à l'amont un compresseur d'air entraîné par la turbine, les gaz d'échappement de la turbine étant injectés dans la veine d'air comprimé pour y être mélangés à celui-ci et y être brûlés dans une chambre de combustion, l'invention a pour objet un dispositif d'injection des gaz dans la veine constitué de bras radiaux comportant un profil aérodynamique, régulièrement répartis entre une virole interne et une virole externe de la veine, lesdits bras radiaux comportant deux cavités internes, chacune possédant sur l'intrados des bras des orifices d'injection, et la cavité disposée en amont du profil aérodynamique est celle apte à recevoir les gaz d'échappement de la turbine en mode de fonctionnement du propulseur en turbofusée, tandis que la cavité disposée en aval du profil aérodynamique des bras est apte à être alimentée en mode de fonctionnement du propulseur en statoréacteur, à travers la virole externe de la veine, en ergols ou en gaz générés par un générateur de gaz annexe, lesdits ergols ou gaz étant prélevés en aval des turbines des turbopompes à ergols du circuit d'alimentation du propulseur ou provenant directement de l'échangeur de tuyère.

Selon une autre caractéristique de l'invention, le dispositif d'injection peut comporter deux anneaux collecteurs disposés respectivement à un tiers et aux deux tiers de la hauteur radiale des bras, lesdits anneaux possédant un profil aérodynamique et comportant chacun deux cavités internes débouchant respectivement dans chacune des cavités amont et aval des bras radiaux afin d'être respectivement alimentées en gaz ou en ergols de la même façon que les cavités correspondantes des bras. L'invention sera mieux comprise, et son mode de réalisation préféré explicité en regard du complément de description qui va suivre, accompagné des planches de dessins parmi lesquelles ;

- la figure 1 montre un propulseur combiné comportant un dispositif d'injection selon la présente invention, appliqué aux fins d'exemple à un circuit "expander" sans que cela constitue une limitation.

- la figure 2 est une perspective éclatée du dispositif d'injection selon l'invention, selon un mode de réalisation,

- la figure 3 est une section d'un bras radial du dispositif d'injection selon AA de la figure 1 ;

- la figure 4 est un schéma d'un premier type de circuit d'alimentation du propulseur de la figure 1, possédant un cycle de fonctionnement dit expander ;

- la figure 5 est un schéma d'un autre type de circuit d'alimentation du propulseur de la figure 1, comportant un générateur annexe de gaz pour l'alimentation de la turbine, et des turbines de turbopompe.

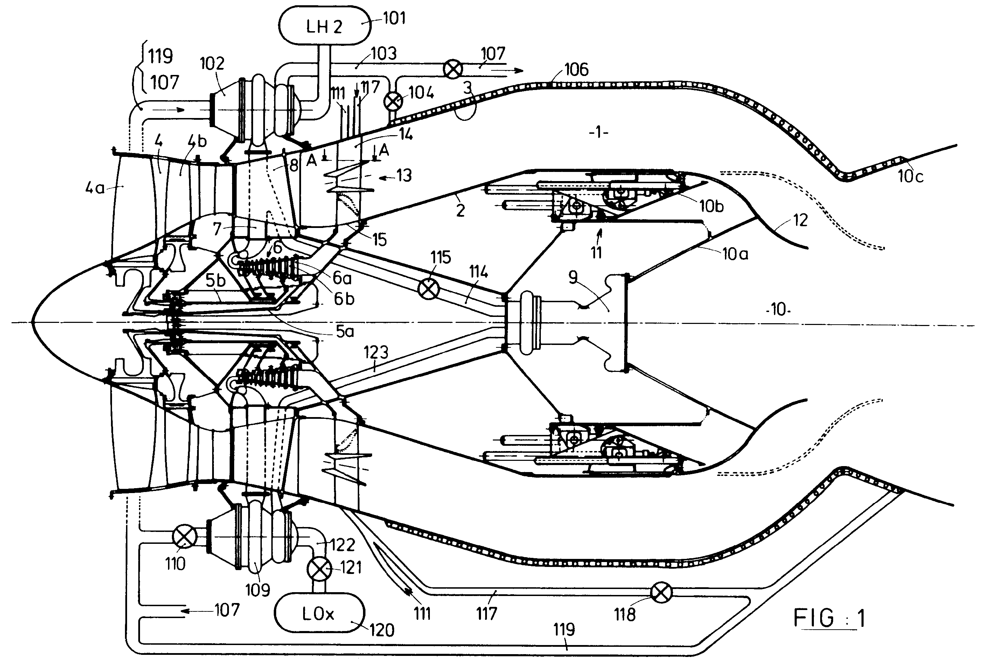

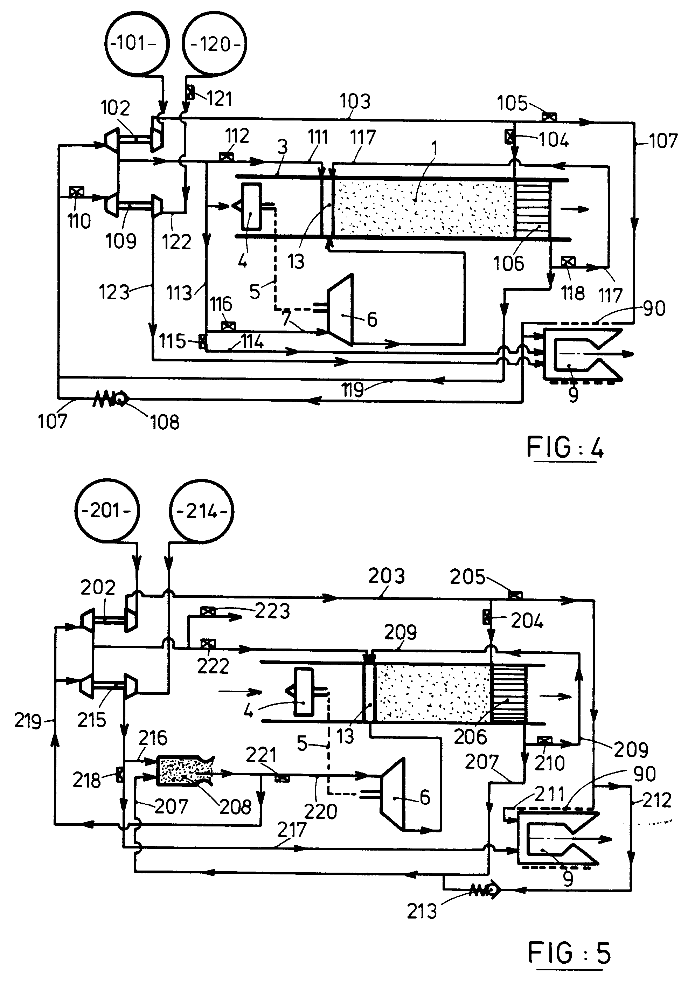

A la figure 1 a été représenté un propulseur combiné turbo-stato-fusée conforme aux objectifs de la présente invention et qui en inclut les perfectionnements. L'environnement externe du propulseur (circuits d'alimentation) a été représenté pour un cycle d'alimentation "expander" correspondant à la figure 4 à des fins d'exemplification. L'adaptation au circuit "à générateur de gaz" selon la figure 5 ne modifie en rien la structure interne du propulseur, seules les alimentations étant modifiées.

Le propulseur comporte une veine annulaire 1 formée entre un corps central 2 et un carter externe 3. En amont de la veine est disposé un compresseur d'air 4 ici formé de deux étages contrarotatifs 4a,4b reliés par des arbres concentriques 5a, 5b à deux rotors eux-mêmes contrarotatifs et imbriqués 6a, 6b, d'une turbine de puissance 6, disposée à l'intérieur du corps central en aval du compresseur 4.

Dans la partie aval du corps est disposé un moteur-fusée 9 dont les gaz propulsifs sont éjectés dans une tuyère 10 formée d'une première section divergente 10a, d'une seconde section 10b amovible et d'une troisième section divergente fixe 10c.

La veine annulaire 1 servant aux modes de propulsion turbo et stato débouche dans la tuyère 10 à l'emplacement qu'occupe en mode fusée la section amovible 10b. Un dispositif 11 d'escamotage de la section 10b du divergent du moteur-fusée 9, et de mise en place d'un moyen de variation de section du col de tuyère est disposé à l'intérieur du corps central 2. Il permet après escamotage de la section 10b de mettre en place dans la veine des volets 12 en forme de pétale dont la position axiale permettra de faire varier la section du col de la tuyère convergente divergente en fonction du mode de fonctionnement turbo ou stato.

La turbine de puissance 6 est alimentée en gaz sous pression provenant d'un circuit d'alimentation externe (qui sera détaillé plus loin en regard des figures 4 et 5), les gaz de turbine parvenant à la partie amont de la turbine au moyen d'une tubulure d'admission 7 traversant des bras structuraux 8 qui relient et maintiennent le corps central 2 au carter externe 3.

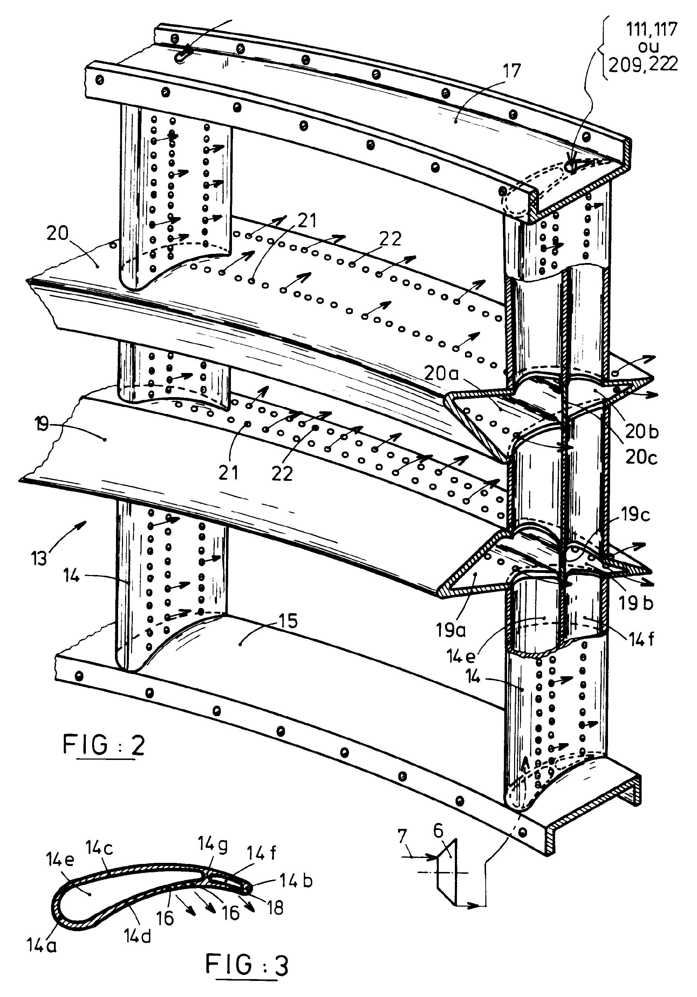

En sortie de turbine, les gaz qui l'ont traversée sont admis dans la veine 1 au moyen du dispositif d'injection 13 selon l'invention afin d'y être mélangés à l'air issu du compresseur 4 et brûlés en sortie du dispositif d'injection. Celui-ci est constitué (figures 2 et 3) de bras radiaux 14 régulièrement répartis dans la veine. Un mode de réalisation prévu comportera ainsi vingt quatre bras 14 répartis tous les 15°. Chaque bras possède un profil aérodynamique avec un bord d'attaque 14a, un bord de fuite 14b un extrados 14c et un intrados 14d.

Comme on le voit à la section AA de la figure 3 chaque bras 14 est creux et est séparé en deux cavités, l'une amont 14e et l'autre aval 14f par une cloison 14g. La cavité 14e traverse la virole interne 15 du dispositif d'injection, afin d'être alimentée par les gaz issus de la turbine 6. La cavité 14e possède sur sa partie la plus aval des orifices d'injection 16 percés dans la paroi d'intrados 14d des bras 14. Deux rangées d'orifices 16 peuvent par exemple être percée sur toute la hauteur des bras 14. La cavité 14e est fermée sur son extrémité radialement externe par la virole externe 17 du dispositif 13.

La cavité aval 14f, quant à elle traverse la virole 17 pour être alimentée en modes stato et turbo par le circuit d'alimentation et son extrémité radialement interne est obturée par la virole interne 15. Des orifices d'injection 18 sont percés sur la paroi d'intrados 14d sur la partie aval de la cavité 14f.

Le dispositif d'injection 13 comporte également deux anneaux collecteurs 19,20 possédant eux aussi un profil aérodynamique. Dans un premier mode de réalisation les deux anneaux collecteurs 19 et 20 ont un profil aérodynamique symétrique et constant sur toute leur longueur circonférentielle selon les lois classiques de l'injection.

Dans un second mode de réalisation tel que représenté à la figure 2, l'anneau 19, disposé sensiblement au tiers de la hauteur radiale des bras 14 a son intrados tourné vers l'intérieur de la veine tandis que l'anneau 20 situé aux deux tiers de la hauteur radiale de la veine a son intrados tourné vers l'extérieur de la veine. Cette structure a pour avantage de créer une dépression entre les anneaux et d'améliorer le mélange air/carburant.

Les deux anneaux possèdent une cavité amont 19a, 20a qui débouche dans les cavités amont 14e de chacun des bras radiaux 14 et une cavité aval 19b, 20b qui débouche dans les cavités aval 14f des bras 14.

Des orifices d'injection 21,22 sont percés dans les intrados et extrados des anneaux 19,20 respectivement à proximité de la cloison 19c, 20c qui sépare les cavités 19a, 19b et 20a, 20b, pour l'injection dans la veine des gaz distribués par les cavités amont 19a, 20a des anneaux et à proximité du bord de fuite de l'anneau pour l'injection des gaz distribués par les cavités aval 19b, 20b.

Si l'on regarde maintenant les figures 4 et 5, on a représenté deux types d'alimentation en ergols compatibles avec la structure de propulseur décrit aux figures 1 à 3.

A la figure 4 on a représenté le circuit hydraulique d'un propulseur combiné turbostatofusée à cycle dit expander.

Dans ce schéma, bien que l'on ait représenté la turbine de puissance et le moteur fusée en dehors de la veine d'air, pour des raisons de commodité, il s'agit bien respectivement de la turbine 6 et de la fusée centrale 9 disposées dans le corps central 2 du propulseur de la figure 1.

Dans le propulseur à cycle expander, le seul ergol utilisé en mode stato ou turbo est l'hydrogène.

L'hydrogène liquide issu d'un réservoir de stockage 101 est pompé au moyen d'une turbopompe 102 puis est amené par une canalisation 103 et deux vannes 104,105 d'une part à un échangeur de chaleur 106 disposé sur la paroi de la chambre de combustion et d'autre part à une canalisation 107 qui, munie d'un clapet anti-retour 108 va alimenter les turbines de deux turbopompes, l'une 102 déjà citée et l'autre 109 destinée à l'alimentation en oxygène du moteur-fusée 9. Une vanne 110 permet d'isoler la turbopompe 109 du circuit quand besoin est, c'est à dire en modes turbo et stato.

En sortie des turbines des turbopompes 102 et 109, l'hydrogène qui vient d'être détendu et qui a donc utilisé une partie de son énergie, est séparé en deux circuits dont l'un, 111, commandé par une vanne 112 autorise l'injection d'hydrogène dans la cavité 14f des bras radiaux et 19b, 20b des anneaux du dispositif d'injection 13, et dont l'autre 113 se ramifie lui même en deux parties 114 et 7 commandées chacune par une vanne 115, 116. Le circuit 7 alimente la turbine de puissance 6 tandis que le circuit 114 alimentera en mode fusée le moteur fusée 9. La sortie de la turbine 6 est reliée à la partie interne du dispositif d'injection 13 au travers de la virole 15.

Si l'on revient à l'échangeur de chaleur 106, on voit que l'hydrogène en sortie dudit échangeur, où il a prélevé des calories et augmenté son enthalpie, est utilisé pour alimenter deux circuits, l'un 117 commandé par une vanne 118 permet l'injection en mode stato de l'hydrogène dans les cavités 14f des bras radiaux, et 19b, 20b des anneaux collecteurs du dispositif d'injection 13, tandis que l'autre circuit 119 va rejoindre la tubulure 107 en aval du clapet anti-retour 108 pour apporter l'énergie nécessaire à l'entraînement de la turbopompe 102 en modes turbo et stato. En mode fusée, les turbopompes 102 et 109 sont entraînées par l'hydrogène circulant dans la tubulure 107 qui a prélevé des calories dans un échangeur de chaleur 90 situé sur la paroi de la chambre fusée 9. Pour finir la description du circuit d'alimentation en ergols, il faut ajouter qu'il comporte un réservoir d'oxygène 120 qui peut être isolé par une vanne 121 et dont la sortie 122 est branchée sur la pompe de la turbopompe 109 dont le débit de sortie alimente, par une tubulure 123 en mode fusée seulement, le moteur-fusée 9.

Les différents modes de fonctionnement sont conditionnés par l'ouverture/fermeture des différentes vannes ci-dessus mentionnées afin d'alimenter ou d'interrompre telle ou telle autre partie du circuit, ce qui peut être résumé par le tableau suivant dans lequel les différents modes de fonctionnement sont indiqués avec en regard, l'état d'ouverture (O) / fermeture (F) de chacune des vannes :

| MODE DE FONCTIONNEMENT | VANNES | | | | | | | |
|---|---|---|---|---|---|---|---|---|
| | 104 | 105 | 110 | 112 | 115 | 116 | 118 | 121 |
| TURBO-EXPANDER | O | F | F | F | F | O | O | F |
| STATO-REACTEUR | O | F | F | O | F | F | O | F |
| FUSEE | F | O | O | F | O | F | F | O |

Le fonctionnement d'un tel propulseur est le suivant :

Le démarrage est assuré par un démarreur à poudre (non représenté) qui entraîne la turbine de turbopompe à LH$_2$ 102. En mode turboexpander, la vanne 110 étant fermée, la turbopompe à LOx 109 est arrêtée. La vanne 105 étant également fermée, la totalité du débit d'hydrogène passe dans l'échangeur de chaleur 106.

LH$_2$, comprimé par la turbopompe 102 et vaporisé dans l'échangeur 106 entraîne la turbopompe 102 puis la turbine 6 du moteur, (laquelle entraîne le compresseur 4) et enfin est injecté dans la chambre de combstion par la cavité 14e des bras radiaux 14. Simultanément la vanne 118 étant ouverte, la cavité 14f des bras 14 est alimentée en hydrogène directement depuis la sortie de l'échangeur de chaleur 106, ce qui permet d'assurer un bon refroidissement du bord de fuite des bras 14 et des anneaux 19 et 20.

Le passage en mode statoréacteur s'effectue en isolant la turbine 6 par fermeture de la vanne 116 et ouverture simultanée de la vanne 112 de façon à ce que l'hydrogène en sortie de turbine de la turbopompe 102 soit injecté au moyen de la canalisation 111 dans la cavité 14f des bras 14 et dans les cavités correspondantes 19b,20b des anneaux collecteurs. Les vannes 104,118 étant ouvertes, la partie du débit d'hydrogène sorti de l'échangeur 106, qui n'est pas utilisé dans la turbopompe 102 est injectée directement au moyen de la canalisation 117 dans la cavité 14f du bord de fuite des bras. La totalité de l'injection d'hydrogène en mode stato est donc assurée par les cavités de bord de fuite 14f, 19b, 20b.

Le passage en mode fusée s'effectue par fermeture de la vanne 104 et ouverture simultanée des vannes 105, 110, 115 et 121. L'hydrogène issu de la pompe 102 alimente par 107 les turbines des deux turbopompes 102 et 109, puis par 113 et 114 est injecté dans la chambre du moteur fusée 9.

L'oxygène pompé par 109 est amené par la canalisation 123 à la chambre du moteur-fusée 9.

Dans ce dernier mode de fonctionnement, la turbine 6 n'est pas alimentée et le compresseur 4 n'est plus alimenté en air, l'entrée d'air ayant été fermée.

Les bras radiaux d'injection ne sont alimentés ni par l'intérieur (cavité 14e) ni par l'extérieur (cavité 14f).

Si l'on se réfère maintenant à la figure 5, on verra qu'un propulseur comportant le dispositif d'injection selon l'invention peut être utilisé avec un générateur de gaz complémentaire pour l'entraînement de la turbine 6 et des turbopompes à hydrogène et à oxygène.

L'hydrogène liquide issu du réservoir 201 est pompé par la pompe de la turbopompe 202 puis est amené par une tubulure 203 à deux vannes en parallèle 204 et 205. En aval de la vanne 204 est disposé l'échangeur de chaleur de tuyère 206 en sortie duquel le circuit d'hydrogène se sépare en deux parties, la première 207 alimentant directement le générateur de gaz 208 en hydrogène (préalablement vaporisé dans l'échangeur 206), tandis que la seconde partie 209, commandé par une vanne 210 permet en modes turbo et stato l'injection de carburant dans les cavités aval 14f des bras radiaux et 19b, 20b des anneaux collecteurs.

Le circuit commandé par la vanne 205 se sépare lui aussi en deux parties. Une première partie 211 alimentera en H$_2$ la chambre du moteur-fusée 9 tandis que la seconde tubulure 212 comportant un clapet anti-retour 213 rejoindra la tubulure 207 pour apporter un complément de débit d'hydrogène au générateur de gaz 208.

Le circuit d'oxygène comprend un réservoir de stockage 214 à partir duquel l'oxygène est pompé par une turbopompe 215. En sortie de ladite pompe, le circuit d'oxygène se divise en deux : une partie 216 sert à l'alimentation permanente en oxygène du générateur de gaz 208 tandis que l'autre partie 217 commandée par une vanne 218, servira en mode fusée à l'alimentation de la chambre du moteur fusée 9.

Les gaz de combustion du générateur 208 servent d'une part à alimenter en continu, par une tubulure 219, les turbines des deux turbopompes 202 et 215 et, d'autre part à alimenter par une canalisation 220, commandée par une vanne 221, la turbine 6 dont les gaz d'éjection seront injectés dans la cavité 14e des bras radiaux 14.

Quant à la partie du débit de gaz issue du générateur, utilisée dans les turbines 202 et 215, elle sera soit injectée au moyen d'une vanne 222 dans les cavités 14f des bras 14 pour être brûlée en mode turbo et stato, soit rejetée au moyen d'une vanne 223 dans le milieu ambiant, en mode fusée.

Les états d'ouverture (O) / Fermeture (F) des différentes vannes en fonction des modes d'utilisation sont résumés dans le tableau suivant :

| MODES DE FONCTIONNEMENT | VANNES | | | | | | |
|---|---|---|---|---|---|---|---|
| | 204 | 205 | 210 | 218 | 221 | 222 | 223 |
| TURBO-FUSEE | O | F | O | F | O | O | F |
| STATO-FUSEE | O | F | O | F | F | O | F |
| FUSEE | F | O | F | O | F | F | O |

Avec ce type de circuit d'alimentation, le fonctionnement du propulseur est le suivant :

Au démarrage les deux turbo-pompes 202 et 215 sont entraînées au moyen d'un démarreur à poudres, non représenté, soufflant sur leurs turbines.

En mode turbo-fusée, $LH_2$ et LOx sont mis en pression par les turbopompes puis, la vanne 204 étant ouverte et la vanne 205 fermée, la totalité du débit de $LH_2$ est réchauffée et vaporisée dans l'échangeur de tuyère 206 puis est amenée au générateur de gaz 208 par 207 tandis que l'oxygène y est amenée par la canalisation 216.

Les gaz de combustion issus du générateur 208 sont utilisés simultanément pour entraîner les turbopompes 202 et 215 et la turbine de puissance 6 qui entraîne le compresseur 4, avant d'être injectés dans la veine au moyen du dispositif d'injection 13 où ces gaz, nettement excédentaires en $H_2$, brûlent à nouveau au contact de l'air atmosphérique comprimé et s'échappent par la tuyère à section réglable en donnant la poussée nécessaire à l'avion.

Le débit de gaz utilisé pour l'entraînement des turbines 202 et 215 est injecté dans la veine 1 par le dispositif 13 en sortie duquel il se mélange à l'air comprimé et aux gaz du générateur 208 provenant de la turbine 6 pour être brûlé dans la chambre de combustion.

En mode stato-réacteur, les vannes 204 et 210 étant ouvertes et les vannes 205 et 221 fermées, une partie du débit d'hydrogène est amenée directement au dispositif d'injection 13 par la canalisation 209 et les cavités 14f, 19b, 20b de ce dispositif tandis que l'autre partie du débit d'hydrogène est brûlée dans le générateur de gaz 208 comme précédemment. Le compresseur 4 et la turbine 6, isolée, tournent en autorotation et l'air entrant dans la veine 1 subit une simple compression dynamique dans l'entrée d'air. Dans ce mode de fonctionnement, l'intérêt du dispositif d'injection 13 est de permettre le mélange intime d'hydrogène vaporisé issu de 209 et des gaz de combustion du générateur 208.

En mode fusée, les vannes 204, 210, 221 et 222 sont fermées. Le débit d'hydrogène est amené pour partie à la fusée 9 par la canalisation 211 et pour partie au générateur de gaz 208 par les canalisations 212 et 207, tandis que l'oxygène pompé par 215 est amené au générateur de gaz par 216 et au moteur fusée 9 par la canalisation 217 au travers de la vanne 218 ouverte.

Dans les deux types de cycles d'alimentation expander et à générateur de gaz et dans les deux modes turbo et stato, on peut constater que la structure du dispositif d'injection 13 assure une bonne injection du carburant dans chacun des modes de fonctionnement et permet la transition entre les deux modes de fonctionnement puisque les cavités aval 14f, 19b, 20b restent alimentées pendant les deux modes de fonctionnement turbo et stato.

On voit également que la disposition des anneaux collecteurs (dans le mode de réalisation représenté à la figure 2), dont les courbures sont opposées et dont les bords de fuites sont disposés en aval de ceux des bras 14, permet d'assurer un bon accrochage de la flamme sur le bord de fuite des anneaux 19,20 tant dans le mode turbo que dans le mode stato, ainsi qu'une bonne répartition du mélange air/gaz sur la totalité de la hauteur radiale de la veine 1.

Il est évident également qu'il pourrait être utilisé avec un propulseur dont la structure interne serait différente, par exemple avec un compresseur et une turbine non contrarotatifs.

**Revendications**

1. Propulseur combiné turbo-stato-fusée comprenant une turbine (6) à ergols disposée dans un corps central (2) du propulseur, ledit corps central étant entouré d'une veine annulaire (1) comportant à l'amont un compresseur d'air (4) entraîné par la turbine, les gaz d'échappement de la turbine (6) étant injectés dans la veine d'air comprimé pour y être mélangés à celui-ci et y être brûlés dans une chambre de combustion, l'injection des gaz dans la veine étant effectuée au moyen d'un dispositif d'injection (13) constitué de bras radiaux (14) comportant un profil aérodynamique, régulièrement répartis entre une virole interne et une virole externe de la veine, lesdits bras radiaux comportant au moins une cavité radiale (14e) alimentée depuis le corps central du propulseur par les gaz d'échappement de la turbine, et les bras radiaux comportent sur leur intrados (14d) des orifices (16) d'injection desdits gaz d'échappement dans la veine d'air comprimé, caractérisé en ce que les bras radiaux du dispositif d'injection comportent des cavités internes (14f), chacune des cavités (14e, 14f) possédant sur l'intrados des bras des orifices d'injection (16,18), en ce que la cavité (14e) disposée en amont du profil aérodynamique est celle apte à recevoir les gaz d'échappement de la turbine (6) en mode de fonctionnement du propulseur en turbofusée et en ce que la cavité (14f) disposée en aval du profil aérodynamique des bras (14) est apte à être alimentée, en mode de fonctionnement du propulseur en statoréacteur, à travers la virole externe (17)de la veine, en ergols ou en gaz générés par un générateur de gaz annexe (208), lesdits ergols ou gaz étant prélevés en aval des turbines des turbopompes (102, 109) à ergols du circuit d'alimentation du propulseur ou provenant directement de l'échangeur de tuyère (106,206).

2. Propulseur selon la revendication 1 caractérisé en ce que le dispositif d'injection (13) comporte deux anneaux collecteurs (19, 20) disposés respectivement à un tiers et aux deux tiers de la hauteur radiale des bras, lesdits anneaux possédant un profil aérodynamique et comportant chacun deux cavités internes (19a, 20a ; 19b20b) débouchant respectivement dans chacune des cavités amont et aval des bras radiaux afin d'être respectivement alimentées en gaz ou en ergols de la même façon que les cavités (14e, 14f) correspondantes des bras.

3. Propulseur selon la revendication 2 caractérisé en ce que chaque anneau (19,20) comporte sur son intrados et sur son extrados des orifices d'injection (21, 22) disposés au droit de la partie aval de chacune des cavités internes, lesdits orifices étant inclinés vers l'aval de l'anneau.

4. Propulseur selon la revendication 3 apte à optimiser le mélange air-gaz dans la veine caractérisé en ce que l'anneau collecteur (20) radialement externe et l'anneau collecteur (19) radialement interne ont un profil aérodynamique symétrique et constant sur toute leur longueur.

5. Propulseur selon la revendication 3 apte à optimiser le mélange air-gaz dans la veine caractérisé en ce que l'anneau collecteur (20) radialement externe a son intrados tourné vers l'extérieur de la veine, en ce que l'anneau collecteur (19) radialement interne a son intrados tourné vers l'intérieur de la veine et en ce que les bras radiaux ont un profil aérodynamique constant sur leur longueur.

6. Propulseur selon l'une quelconque des revendications 1 à 5 possédant un générateur de gaz annexe (208) et un circuit d'alimentation en ergols comportant notamment un premier circuit d'hydrogène muni d'un échangeur de chaleur sur la paroi de tuyère, où l'hydrogène subit une détente et un second circuit d'alimentation en oxygène caractérisé en ce que, en mode de fonctionnement turbofusée, la cavité aval (14f, 19b 20b) des bras et des anneaux collecteurs du dispositif d'injection est alimentée en $H_2$ provenant dudit échangeur de chaleur (206) tandis que la cavité amont est alimentée en mélange $H_2/H_2O$ vapeur en sortie de la turbine principale (6), et en ce que, en mode de fonctionnement statoréacteur, la cavité aval est alimentée de façon identique tandis que la cavité amont n'est pas alimentée.

7. Propulseur selon l'une quelconque des revendications 1 à 5 comportant un premier circuit d'alimentation en hydrogène, du type dit expander, et un second circuit d'alimentation en oxygène, caractérisé en ce que en mode de fonctionnement turbofusée, la cavité aval (14f, 19b, 20b) des bras et des anneaux collecteurs est alimentée en $H_2$ en aval du circuit régénératif expander (106) et la cavité amont (14a, 19a, 20a) est alimentée en $H_2$ issu de la turbine principale (6) et en ce que en mode de fonctionnement statoréacteur, la cavité amont n'est plus alimentée.

7

**Patentansprüche**

1. Turbo-Staustrahl-Raketen-Kombinationstriebwerk mit einer in einem zentralen Körper (2) des Triebwerks angeordneten Ergol-Turbine (6), wobei dieser zentrale Körper (2) von einem ringförmigen Strömungskanal (1) umgeben ist, der auf der Stromaufwärtigen Seite einen von der Turbine angetriebenen Luftverdichter (4) aufweist, wobei die Austrittsgase der Turbine (6) in den Strömungskanal der komprimierten Luft eingespritzt werden, um dort mit der Luft vermischt und in einer Brennkammer verbrannt zu werden, wobei das Einspritzen der Gase in den Strömungskanal mit Hilfe einer Einspritzvorrichtung (13) bewerkstelligt wird, bestehend aus radialen Armen (14), die ein aerodynamisches Profil besitzen und zwischen einem Innenmantel und einem Außenmantel des Strömungskanals regelmäßg verteilt sind und wengistens einen radialen Hohlraum (14e) enthalten, der von dem zentralen Körper des Triebwerks aus von den Austrittsgasen der Turbine gespeist wird, und wobei die radialen Arme auf ihrer Wölbungsinnenseite (14d) Einspritzöffnungen (16) zum Einspritzen der Austrittsgase in den Strömungskanal für die komprimierte Luft aufweisen, dadurch gekennzeichnet, daß die radialen Arme der Einspritzvorrichtung innere Hohlräume (14f) besitzen, deren jeder (14e, 14f) auf der Wölbungsinnenseite der Arme Einspritzöffnungen (16 18) aufweist, daß der auf der stromaufwärtigen Seite des aerodynamischen Profils angeordnete Hohlraum (14e) in der Betriebsart des Triebwerks als Turborakete die Austrittsgase der Turbine aufnehmen kann, und daß der auf der stromabwärtigen Seite des aerodynamischen Profils der Arme (14) liegende Hohlraum (14f) in der Betriebsart des Triebwerks als Staustrahl-Triebwerk über den Außenmantel (17) des Strömungskanals mit Ergolen oder mit von einem angebauten Gasgenerator (208) erzeugten Gasen gespeist werden kann, wobei die Ergole oder Gase auf der stromabwärtigen Seite der Turbinen der Ergol-Turbopumpen (102, 109) des Triebwerk-Speisekreises entnommen werden oder direkt von dem Düsen-Wärmetauscher (106, 206) kommen.

2. Triebwerk nach Anspruch 1, dadurch gekennzeichnet, daß die Einspritzvorrichtung (13) zwei Sammelringe (19, 20) aufweist, die auf einem Drittel bzw. auf zwei Drittel der radialen Höhe der Arme angeordnet sind, ein aerodynamisches Profil besitzen und jeweils zwei innere Hohlräume (19a, 20a; 19b, 20b) aufweisen, die jeweils in einem der stromaufwärtigen bzw. stromabwärtigen Hohlräume der radialen Arme münden, so daß sie auf dieselbe Weise mit Gasen bzw. mit Ergolen gespeist werden wie die entsprechenden Hohlräume (14e, 14f) der Arme.

3. Triebwerk nach Anspruch 2, dadurch gekennzeichnet, daß jeder Sammelring (19, 20) an seiner Wölbungsinnenseite und an seiner Wölbungsaußenseite Einspritzöffnungen (21, 22) aufweist, die an der Stelle des stromabwärtigen Teils jedes der inneren Hohlräume angeordnet und zur stromabwärtigen Seite des Sammelrings hin geneigt sind.

4. Triebwerk nach Anspruch 3 zur Optimierung des Luft-Gas-Gemischs in dem Strömungskanal, dadurch gekennzeichnet, daß der radial äußere Sammelring (20) und der radial innere Sammelring (19) ein symmetrisches und über ihre gesamte Länge konstantes aerodynamisches Profil haben.

5. Triebwerk nach Anspruch 3 zur Optimierung des Luft-Gas-Gemischs in dem Strömungskanal, dadurch gekennzeichnet, daß die Wölbungsinnenseite des radial äußeren Sammelrings (20) der Außenseite des Strömungskanals zugekehrt ist, daß die Wölbungsinnenseite des radial inneren Sammelrings (19) der Innenseite des Strömungskanals zugekehrt ist und daß die radialen Arme ein über ihre gesamte Länge konstantes aerodynamisches Profil haben.

6. Triebwerk nach einem der Ansprüche 1 bis 5 mit einem angebauten Gasgenerator (208) und einem Ergol-Speisekreis, der insbesondere einen ersten Speisekreis für Wasserstoff umfaßt, der mit einem auf der Wandung der Düse angeordneten Wärmetauscher ausgestattet ist, in dem der Wasserstoff entspannt wird, und einen zweiten Speisekreis für Sauerstoff, dadurch gekennzeichnet, daß in der Betriebsart als Turborakete der stromabwärtige Hohlraum (14f, 19b, 20b) der Arme und der Sammelringe der Einspritzvorrichtung mit aus dem genannten Wärmetauscher kommendem $H_2$ gespeist wird, während der stromaufwärtige Hohlraum mit einem $H_2/H_2O$-Dampfgemisch vom Ausgang der Hauptturbine (6) gespeist wird, und daß in der Betriebsart als Staustrahl-Triebwerk der stromabwärtige Hohlraum auf dieselbe Weise gespeist wird, während der stromaufwärtige Hohlraum nicht gespeist wird.

7. Triebwerk nach einem der Ansprüche 1 bis 5 mit einem ersten Speisekreis für Wasserstoff vom Entspannungstyp und einem zweiten Speisekreis für Sauerstoff, dadurch gekennzeichnet, daß in der Betriebsart als Turborakete der stromabwärtige Hohlraum (14f, 19b, 20b) der Arme und der Sammelringe stromabwärts des regenerativen Entspannungskreises(106) mit $H_2$ gespeist wird und der stromaufwärtige Hohlraum (14a, -19a, 20a) mit $H_2$ gespeist wird, das von der Hauptturbine (6) abgegeben wird, und daß der stromabwärtige Hohlraum in der Betriebsart als Staustrahl-Triebwerk nicht gespeist wird.

## Claims

1. Combined turbo-ramjet-rocket propulsion unit comprising an ergols-fuelled turbine (6) situated in the central body (2) of the propulsion unit, the said central body being surrounded by an annular duct (1) comprising at the upstream end an air compressor (4) driven by the turbine, the exhaust gases from the turbine (6) being injected into the stream of compressed air, there to be mixed with this latter and burned in a combustion chamber, the injection of the gases into the airstream being carried out by means of an injection device (13) made up of radial struts (14) having an aerofoil profile, evenly spaced out between an inner shell and an outer shell of the duct, the said radial struts comprising at least one radial chamber (14e) supplied from the central body of the propulsion unit with the exhaust gases from the turbine, and the radial struts comprise on their pressure face (14d) holes (16) for injecting the said exhaust gases into the stream of compressed air, characterised in that the radial struts of the injection device comprise internal chambers ( 14f), each of the chambers ( 14e, 14f) possessing on the pressure face of the struts injector holes (16, 18), in that the chamber (14e) placed upstream of the aerofoil profile is that capable of receiving the exhaust gases from the turbine (6) during operation of the propulsion unit in the turbo-rocket mode and in that the chamber (14f) placed downstream of the aerofoil profile of the struts (14) is capable, during the operation of the propulsion unit in ramjet mode, of being supplied via the outer shell (17) of the duct with ergols or with gases generated by the associated gas generator (208), the said ergols or gases being drawn off downstream of the turbines of the ergols turbo-pumps (102, 109) in the fuel supply circuit of the propulsion unit, or coming directly from the heat exchanger in the nozzle wall (106, 206).

2. Propulsion unit in accordance with Claim 1, characterised in that the injection device (13) comprises two annular manifolds (19, 20) placed respectively at one third and two thirds of the height of the radial struts, the said manifolds having an aerofoil profile and each comprising two internal chambers (19a, 20a; 19b, 20b) opening respectively into each of the upstream and downstream chambers of the radial struts so as to be supplied respectively with gas or ergols in the same way as the corresponding chambers (14e, 14f) of the struts.

3. Propulsion unit in accordance with Claim 2, characterised in that each annulus (19, 20) comprises on its pressure face and its suction face injector holes (21, 22) situated in the area of the downstream part of each of the inner chambers, the said holes being inclined towards the rear of the annulus.

4. Propulsion unit in accordance with Claim 3, capable of optimising the air-gas mixture in the duct characterised in that the radially outer manifold annulus (20) and the radially inner manifold annulus (19) have symmetrical and constant aerofoil profiles throughout their length.

5. Propulsion unit in accordance with Claim 3, capable of optimising the air-gas mixture in the duct characterised in that the radially outer manifold annulus (20) has its pressure face turned towards the outside of the duct, in that the radially inner manifold annulus (19) has its pressure face turned towards the inside of of the duct and in that the radial struts have a constant aerofoil profile throughout their length.

6. Propulsion unit in accordance with any one of Claims 1 to 5 possessing an associated gas generator (208) and an ergols supply circuit comprising notably a first hydrogen circuit equipped with a heat exchanger in the wall of the nozzle, where the hydrogen undergoes expansion and a second circuit supplying oxygen, characterised in that during turbo-rocket operating mode the downstream chamber (14f, 19b, 20b) of the struts and annular manifolds of the injection device is supplied with $H_2$ coming from the said heat exchanger (206) whilst the upstream chamber is supplied with a mixture of $H_2/H_2O$ vapour coming from the main turbine (6), and in that during ramjet operating mode, the downstream chamber is supplied in identical fashion whilst the upstream chamber is not supplied.

7. Propulsion unit in accordance with any one of Claims 1 to 5 comprising a first hydrogen supply circuit, of the so-called expander type, and a second circuit supplying oxygen, characterised in that in turbo-rocket operating mode the downstream chamber (14f, 19b, 20b) of the struts and the annular manifolds is supplied with $H_2$ downstream of the regenerative expander (106) and the upstream chamber (14a, 19a, 20a) is supplied with $H_2$ coming from the main turbine (6) and in that in ramjet operating mode the upstream chamber is no longer supplied.

FIG : 1

EP 0 362 054 B1

FIG : 2

FIG : 3

FIG : 4

FIG : 5